# EUROPEAN PATENT APPLICATION

(11) **EP 4 407 638 A1**
(43) Date of publication of application: **31.07.2024**
(21) Application number: 24154057.4
(22) Date of filing: 26.01.2024
(51) Int. Cl.: H01F 1/057, H01F 41/02

(54) **A MANUFACTURING METHOD OF RARE EARTH SINTERED MAGNET**

(30) Priority: 30.01.2023 KR 20230011497
(71) Applicant: Star Group Ind. Co., Ltd, Daegu 42714 (KR)
(72) Inventor: LEE, Sang Hyub, 42995 Daegu (KR); KIM, Dong Hwan, 42004 Daegu (KR); KONG, Koon Seung, 42706 Daegu (KR)
(74) Representative: dompatent von Kreisler Selting Werner - Partnerschaft von Patent- und Rechtsanwälten mbB

(57) **Abstract**

In the present invention, the manufacturing method of rare earth sintered magnet according to the present invention comprises manufacturing rare-earth alloy of xwt%RE-ywt%B-zwt%TM-bal.wt%Fe (where RE=rare earth element, TM=3d transition element, x=28-35, y=0.5-1.5, z=0~15); pulverizing the manufactured alloy to a size of 1.0 ~ 5.0*µ*m or less; orienting and compressing the pulverized alloy in a magnetic field to be magnetized; sintering the magnetized alloy; cleaning the sintered body; forming a low melting point metal layer on the surface of the cleaned body; coating a slurry mixed with a liquid solvent and a heavy rare-earth metal compound on the surface of the low melting point metal layer formed on the sintered body to form a heavy rare-earth metal compound coating layer; loading the sintered body with the low melting point metal layer and the heavy rare-earth metal compound coating layer into a heating furnace to allow the heavy rare earth metal to diffuse into the grain boundaries of the sintered body under a vacuum or inert gas atmosphere; loading the sintered body in which the heavy rare-earth metal has diffused into the grain boundaries of the alloy, into a heating furnace to perform a stress relief heat treatment under a vacuum or inert gas atmosphere; and performing a final heat treatment after the stress relief heat treatment.

## Description

### BACKGROUND OF THE INVENTION

### FIELD OF THE INVENTION

The present invention relates to a manufacturing method of rare earth sintered magnets. The present invention relates to a manufacturing method of rare earth sintered magnets in particular, after forming a low melting point metal layer and forming a slurry coating layer of a heavy rare-earth metal compound on the surface of a sintered body made of rare-earth alloy due to a grain boundary diffusion, capable of improving the temperature coefficient and coercive force of residual magnetic flux density depending on a temperature, which is magnetic properties.

### DESCRIPTION OF THE RELATED ART

Demand for NdFeB sintered magnets is gradually increasing for in use in motors such as hybrid vehicles, and it is required to additionally increase the coercive force (coercivity) (Hcj) of the NdFeB sintered magnets. For increasing the coercive force (Hcj) of the NdFeB sintered magnets, a method of substituting a part of Nd with Dy or Tb is publicly known. However, the resources of Dy or Tb are scarce and maldistributed, making substitution of these elements difficult. Also, the substitution causes a decrease in the residual magnetic flux density(Br) or maximum energy product ((BH)max) of the NdFeB sintered magnet, which is problematic.

Dy or Tb bonded to the surface of the magnet is delivered into the interiors of the sintered body through the grain boundaries of the sintered body and diffuses from the grain boundaries into the interior of each particle of the main phase Re2Fe14B (Re is a rare earth element). This is called grain boundary diffusion. During grain boundary diffusion, the Re-rich phase at the grain boundary is liquefied by heating, so that the diffusion rate of Dy or Tb within the grain boundary is much faster than the diffusion rate from the grain boundary to the interior of the main phase.

It is possible to adjust the temperature and time of heat treatment by using this difference in diffusion rate. It can be realized that a state in which the concentration of Dy or Tb is only high in the area (surface area) extremely close to the grain boundary of the main phase particles in the sintered body throughout the sintered body.

Since the coercive force(Hcj) of NdFeB sintered magnets are determined depending on the state of the surface area of the main phase particles, NdFeB sintered magnets having crystal grains with a high concentration of Dy or Tb in the surface area have high coercive force.

Additionally, the increase in the concentration of Dy or Tb results in a decrease in the residual magnetic flux density (Br) of the magnet. However, the residual magnetic flux density (Br) of the main phase particles as a whole is not affected by this area since it is only the surface area of each main phase particle. In this way, it has a high coercive force (Hcj) and a residual magnetic flux density (Br) similar to NdFeB sintered magnets without Dy or Tb substitution, thereby high-performance magnets can be manufactured. This method is called the grain boundary diffusion method.

As industrial manufacturing methods for NdFeB sintered magnet by the grain boundary diffusion method, there is a method of forming and heating the fine powder layer of Dy or Tb fluoride or oxide on the surface of the NdFeB sintered magnet. Also, there is a method of embedding and heating an NdFeB sintered magnet into a mixed powder of a powder of Dy or Tb fluoride or oxide and a per hydrogenated Ca powder.

Even before the grain boundary diffusion method described above became publicly known, it was proposed that high-temperature demagnetization could be reduced by diffusing at least one of Tb, Dy, Al, or Ga near the surface of the NdFeB-based sintered magnet (Japanese Patent Laid-Open No. 01-117303), or it was proposed that the deterioration of magnetic properties due to a processing deterioration was prevented by depositing at least one of Nd, Pr, Dy, Ho, and Tb on the surface of the NdFeB sintered magnet (Japanese Patent Publication No. 62-074048).

### PRIOR ART DOCUMENTS

Patent Document (1): Japanese Patent Laid-Open No. 01-117303
Patent Document (2): Japanese Patent Publication No. 62-074048
Patent Document (3): Korean Registered Patent 10-1447301

### SUMMARY OF THE INVENTION

The present invention relates to a manufacturing method of rare earth sintered magnets, on the surface of a sintered body made of rare-earth alloy having xwt%RE-ywt%B-zwt%TM-bal.wt%Fe (where RE=rare earth element, TM=3d transition element, x=28-35, y = 0.5 ~ 1.5, z = 0 ~ 15), after a low melting point metal layer is formed and a layer of heavy rare-earth metal compound slurry is formed, grain boundary diffusion is performed. Thus the rare earth permanent magnets will have the improved magnetic properties according to the temperature, temperature coefficient and coercive force of the residual magnetic flux density.

In order to achieve the object mentioned above, the manufacturing method of rare earth sintered magnet according to the present invention is characterized in that it comprises manufacturing rare-earth alloy of xwt%RE-ywt%B-zwt%TM-bal.wt%Fe (where RE=rare earth element, TM=3d transition element, x=28-35, y=0.5-1.5, z=0-15); pulverizing the manufactured alloy to a size of 1.0 ~ 5.0*µ*m or less; orienting and compressing the pulverized alloy in a magnetic field to be magnetized; sintering the magnetized alloy; cleaning the sintered body; forming a low melting point metal layer on the surface of the cleaned body; coating a slurry mixed with a liquid solvent and a heavy rare-earth metal compound on the surface of the low melting point metal layer formed on the sintered body to form a heavy rare-earth metal compound coating layer; loading the sintered body with the low melting point metal layer and the heavy rare-earth metal compound coating layer into a heating furnace to allow the heavy rare earth metal to diffuse into the grain boundaries of the sintered body under a vacuum or inert gas atmosphere; loading the sintered body in which the heavy rare-earth metal has diffused into the grain boundaries of the alloy, into a heating furnace to perform a stress relief heat treatment under a vacuum or inert gas atmosphere; and performing a final heat treatment after the stress relief heat treatment.

In the manufacturing method of rare earth sintered magnets according to the present invention, the metal of the low melting point metal layer is any one of Cu, Al, Ga or and alloys of Cu, Al, and Ga.

In the manufacturing method of rare earth sintered magnets according to the present invention, the thickness of the low melting point metal layer is 1 to 60*µ*m, preferably 1 to 10*µ*m, more preferably 1 to 6*µ*m.

In the manufacturing method of rare earth sintered magnets according to the present invention, the weight of the low melting point metal layer is 0.6% by weight of the sintered body.

In the manufacturing method of rare earth sintered magnets according to the present invention, the low melting point metal layer is formed by electroplating or electroless plating or coating.

In the manufacturing method of rare earth sintered magnets according to the present invention, in coating of forming methods of the low melting point metal layer, The coated slurry is composed of solid powder of low melting point metal at 40 to 60 volume% and liquid solvent at 40 to 60 volume%.

In the Manufacturing method of rare earth sintered magnets according to the present invention, the heavy rare-earth metal compound is any one of Gd-Hydride, Gd-Fluoride, Nd-Hydride, Ho-Fluoride, Ho-Hydride, Dy-Hydride, Dy-Fluoride, Tb Hydride, and Tb-Fluoride powders.

In the Manufacturing method of rare earth sintered magnet according to the present invention, in the rare-earth alloy of xwt%RE-ywt%B-zwt%TM-bal.wt%Fe (where RE=rare earth element, TM=3d transition element, x=28-35, y= 0.5~1.5, z=0~15), the RE comprises one or more rare earth element of Nd, Pr, La, Ce, Ho, Dy, and Tb.

In the Manufacturing method of rare earth sintered magnet according to the present invention, in the rare-earth alloy of xwt%RE-ywt%B-zwt%TM-bal.wt%Fe (where RE=rare earth element, TM=3d transition element, x=28-35, y= 0.5~1.5, z=0~15), the TM comprises one or more 3d transition metals of Co, Cu, Al, Ga, Nb, Ti, Mo, V, Zr, and Zn.

In the Manufacturing method of rare earth sintered magnet according to the present invention, the molded body obtained by orientation and compression in a magnetic field is loaded into a sintering furnace and sufficiently maintained under a vacuum atmosphere and below 400° C to completely remove the remaining impure organic substances.

Sintering is achieved under the sintering conditions: temperature 900°C to 1200°C, maintenance time: 2 to 8 hours, atmosphere: vacuum, argon, etc. The temperature range is preferably 1,000 to 1,100°C, and the maintenance time is preferably 4 to 6 hours.

In the manufacturing method of rare earth sintered magnets according to the present invention, in diffusing heavy rare-earth metals into the grain boundary phase of the alloy, the diffusion is performed at the diffusion temperature at the range of 400 to 1000°C and 1 to 10 times or more.

In the Manufacturing method of rare earth sintered magnets according to the present invention, the slurry coating layer remaining on the surface after the grain boundary diffusion treatment is removed, and then stress relief heat treatment is performed at a temperature of 400 to 1,000°C for 2 to 15 hours. Preferably, the stress relief heat treatment is performed at a temperature of 850 to 950°C for 8 to 12 hours. More preferably, the stress relief heat treatment is performed at 900°C for 10 hours.

In the manufacturing method of rare earth sintered magnets according to the present invention, after the stress relief heat treatment, a final heat treatment is performed at a temperature of 400 to 600°C for 0.5 to 3 hours. Preferably, the final heat treatment is performed at a temperature of 450 to 550°C for 1.5 to 2.5 hours.

According to the manufacturing method of rare earth sintered magnet according to the present invention, after forming a low melting point metal layer and forming a coating layer of a heavy rare-earth metal compound on the surface of a sintered body made of rare-earth alloy, the sintered body is composed of the low melting point metal layer and the coating layer of the heavy rare-earth metal compound. When the heavy rare-earth metals are diffused into the grain boundary phase of the sintered body under a vacuum or inert gas atmosphere, a liquid phase in which the low-melting-point metal is liquefied and a solid phase of the heavy rare-earth metal coexists at the diffusion temperature, and then the liquid phase of the low melting point metal acts as a solvent, thus allowing to increase the degree of freedom of heavy rare-earth metals decomposed from the heavy rare-earth metal compound, which has the effect of improving diffusion into grain boundaries.

In addition, at the sintering temperature, the low melting point metal layer exists uniformly in the liquid phase on the surface of the sintered body, which has the effect of making the diffusion of heavy rare-earth metals into the grain boundary phase of the sintered body uniform across the entire surface of the sintered body.

### BRIEF DESCRIPTION OF THE DRAWINGS

The above and other features and advantages of the present invention will become more apparent by describing in detail exemplary embodiments thereof concerning the attached drawing(s) in which:

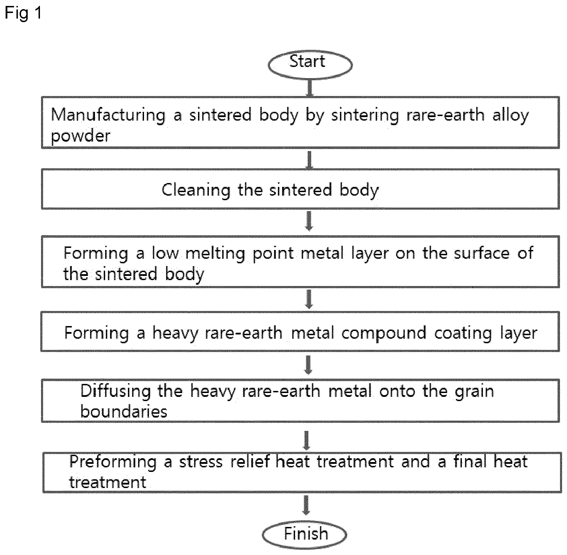

Figure 1 is a flowchart showing the manufacturing process of the rare earth permanent magnet according to the present invention.

### DETAILED DESCRIPTION OF THE EMBODIMENTS

### [Manufacturing method]

### (1) Manufacturing rare-earth alloy powder

It is comprises preparing a powder made of rare-earth alloy as a raw material powder. When the rare-earth alloy is comprised of at least one selected from RE=Nd, Pr, La, Ce, Ho, Dy and Tb; Fe, at least one selected from one or more 3d transition metals TM=Co, Cu, Al, Ga, Nb, Ti, Mo, V, Zr and Zn; and B, the rare-earth alloy can be RE-Fe alloy, RE-Fe-TM alloy, RE-Fe-B alloy or RE-Fe-TM-B alloy. Specifically, Nd-Fe-B alloy, Nd-Fe-Co alloy, Nd-Fe-Co-B alloy, etc. can be mentioned. Also, the known powder of rare-earth alloys used in rare-earth sintered magnets can be used as raw material powders.

Raw material powder is an alloy comprised of xwt%RE-ywt%B-zwt%TM-bal.wt%Fe (where RE=rare earth element, TM=3d transition element, x=28-35, y=0.5-1.5, z=0-15).

A raw material powder is composed of an alloy that has the desired composition. Pulverizing cast ingots or thin foils that have been rapidly solidified can produce the raw material powder by using a pulverizing device such as a jet mill, attritor mill, ball mill, or vibrating mill, or by using a gas atomization method. When powders obtained by a publicly known powder production method or powders produced by an atomization method are further pulverized, it can be used. By appropriately changing the pulverizing conditions or manufacturing conditions, the particle size distribution of the raw material powder and the shape of each particle constituting the powder can be adjusted. The shape of the particle is not particularly important, but the closer it is to a true sphere, the easier it is to achieve densification, and it is easier for the particle to rotate when a magnetic field is applied. By using the atomization method, powders with a high sphericity can be obtained.

In the process of coarsely pulverizing the manufactured alloy strip, the strip is loaded into a vacuum furnace, evacuated, and maintained in a hydrogen atmosphere for more than 2 hours so that the hydrogen is absorbed into the strip. Subsequently, the strip is heated to 600°C under a vacuum atmosphere, and removed the hydrogen from the strip.

The hydrogen-treated powder that is pulverized coarsely, is manufactured into a uniform and fine powder with an average particle diameter ranging from 1 to 5.0*µ*m by pulverizing method using jet mill technology in a nitrogen or inert gas atmosphere.

Since the finer the raw material powder, the easier it is to increase the packing density. The maximum particle size is preferably 5.0 µm or less.

### (2) Orienting and molding in a magnetic field

A lubricant can be added to the raw material powder. In the case of using a mixture including a lubricant, each particle constituting the raw material powder is likely to rotate when a magnetic field is applied, which will improve its the orientation. The lubricant can be used in various materials and forms(liquid or solid), which do not substantially react with the raw material powder. For example, liquid lubricants include ethanol, machine oil, silicone oil, and castor oil, while solid lubricants include metal salts such as zinc stearate, hexagonal boron nitride, and wax. The amount of liquid lubricant should be added in a range of 0.01% to 10% by weight taking into account 100g of the raw material powder. The amount of solid lubricant is added in the range of 0.01% to 5% by weight taking into account the weight of the raw material powder.

A mold with the desired shape and size is prepared to obtain a dust body of the desired shape and size. The mold can be conventionally used in the production of the duct body used as materials for sintered magnets, and typically includes a die and an upper and a lower punch. In addition, a Cold Isostatic Press can be used.

The powders are oriented by generating a high magnetic field when the raw material powder is filled into the mold and pulse current is applied from the left and right sides of the mold in a nitrogen atmosphere. Then te powders are entirely oriented by the magnetic field generated when the direct current is applied. Dust molding and maintaining the orientation of powders in a magnetic field is simultaneously performed to prepare a molded body.

### (3) Sintering

The molded body obtained by molding in a magnetic field is loaded into a sintering furnace and sufficiently maintained at 400° C below under a vacuum atmosphere to completely remove remaining impure organic substances.

The molded body is sintered under the sintering conditions: temperature: 900°C to 1200°C, maintenance time: 0.5 to 3 hours, atmosphere: vacuum, argon, etc. Preferably, the temperature range is 1,000 to 1,100°C, and the maintenance time is preferably 1 to 2 hours and 30 minutes.

The sintered body is processed into a magnet 12.5*12.5*5mm in size.

After immersing the processed magnet into a predetermined size in an alkaline degreaser solution, the oil on the surface of the magnet was removed by rubbing it with a ceramic ball with a diameter of 2 to 10 mm, and the magnet was thoroughly cleaned with distilled water at several times and removed the degreaser completely.

### (4) Forming a low melting point metal layer on the surface of the sintered body

When the low melting point metal layer is formed on the surface of the sintered body of the present invention, the metal is one of Cu, Al, and Ga or alloys of Cu, Al, and Ga.

If a low melting point metal layer is uniformly formed on the surface of the sintered body to a predetermined thickness, a subsequent heavy rare-earth metal compound coating layer can be formed advantageously.

Therefore, to form a low melting point metal layer with a uniform and predetermined thickness on the surface of the sintered body, any one of electroplating or electroless plating, slurry coating and metal or alloy powder spray can be used.

The thickness of the low melting point metal layer is 1 to 20*µ*m. It is 1 preferably to 10 *µ*m, more preferably 1 to 5*µ*m.

In the manufacturing method of rare earth sintered magnets according to the present invention, the low melting point metal layer is 0.6% by weight of the sintered body.

Among the forming methods of the low melting point metal layer of the present invention, electroless plating is preferable when using a basic plating solution with a hydrogen ion concentration (PH) of 12.5 or higher.

Among the forming methods of the low melting point metal layer of the present invention, the coating method involves coating a mixed slurry with low melting point metal powder and a liquid solvent.

The low melting point metal slurry is manufactured by mixing low melting point metal powder and liquid solvent in a ratio of 40 to 60% by volume: 40 to 60% by volume.

The liquid solvents are ethanol or alcohol.

Among the forming methods of the low melting point metal layer of the present invention, the spray method can be a vacuum plasma spray or an inert gas plasma spray.

### (5) Forming a heavy rare earth compound coating layer on the surface of the low melting point metal layer attached to the sintered body.

An object of the present invention improves the temperature characteristics of coercive force and residual magnetic flux density by adding a heavy rare-earth metal. By the grain boundary diffusion process, the heavy rare-earth metal penetrates the sintered body grain boundaries to increase both the temperature coefficient of residual magnetic flux density and coercivity simultaneously.

According to the present invention, in order to uniformly coat the heavy rare-earth metal compound on the surface of the low melting point metal layer bonded to the rare earth sintered body, the solid powder of the heavy rare-earth metal compound and the liquid solvent are mixed at 40-60% by volume: 40-60% by volume. The mixed heavy rare-earth metal compound slurry is put down in a container and evenly dispersed by using a stirrer (magnetic stirrer). Then, it is immersed and maintained for 1 to 2 minutes in the container so that the heavy rare-earth metal compound is uniformly coated on the magnet surface. Also, it is possible to uniformly coat the heavy rare-earth metal compound on the magnet surface using spray method.

The liquid solvent may be alcohol.

The heavy rare-earth metal compound includes at least one of Gd-Hydride, Gd-Fluoride, Gd-oxide, Gd-oxyfluoride, Nd-Hydride, Ho-Fluoride, Ho-Hydride, Dy-Hydride, Dy-Fluoride, Tb-Hydride, and Tb- Fluoride powders.

In the slurry, the heavy rare-earth metal compound powder, which is a solid powder, contains hydrogen(H), fluorine(F), and oxygen(O) in the form of a compound. These compound are decomposed and discharged upon heating for grain boundary diffusion as described later. Gases such as the decomposed hydrogen also contribute to the miniaturization of particles. The heavy rare earth elements, Gd, Nd, Ho, Dy, and Tb are decomposed by heating and diffused into grain boundaries.

The average particle size of the solid powder used in the present invention is 5 *µ*m or less, preferably 4 *µ*m or less, and more preferably 3 *µ*m or less. If the particle size is too large, it is difficult to alloy with a matrix structure during heating. Also, there are problem with the adhesion of the surface layer to the matrix structure. The smaller the particle diameter, the more dense a surface layer is formed after heating. In order to use the surface layer as a corrosion prevention film, it is better to have a smaller particle size. Therefore, there is no specific lower limit of particle size. If the cost is not considered, ultrafine particles of several 10 nm are ideal, but the average particle size of the most desirable metal powder for practical use is approximately 0.3*µ*m to 3 *µ*m.

### (6) Grain boundary diffusion

The sintered body has the low melting point metal layer and the slurry coating layer of the heavy rare-earth metal compound that is formed. It is loaded into a heating furnace and heated at a temperature rate = 1°C/min under an argon atmosphere to diffuse the heavy rare-earth metal into the grain boundaries inside the magnet. When it is maintained at a temperature of 700 to 1,000°C for 1 to 10 hours, the heavy rare-earth metal compound or heavy rare-earth metal alloy is decomposed into a heavy rare earth element, which diffuses into the magnet to conduct the penetration reaction.

The temperature is preferably maintained at 900°C for 6 hours, at 800°C for 10 hours, or at 850°C for 9 hours.

The heating mentioned above makes it easy to perform the grain boundary diffusion method and therefore the high characterization of the sintered magnet, namely the residual magnetic flux density(Br) or the maximum energy product((BH)max), is maintained to be higher before the grain boundary diffusion process is performed and the coercivity(Hcj) is high. The grain boundary diffusion method has been reported to have a significant effect on a thin magnet, and it is particularly effective for a thickness that is equal to or smaller than 5 mm.

### (7) Stress relief heat treatment and final heat treatment

After the grain boundary diffusion treatment, the slurry coating layer that remains on the surface is removed, and subsequently a stress relief heat treatment is performed at a temperature of 400 to 1,000°C for 2 to 15 hours. Preferably, the stress relief heat treatment is performed at a temperature of 850 to 950°C for 8 to 12 hours.

After the stress relief heat treatment, a final heat treatment is performed at a temperature of 400 to 600°C for 0.5 to 3 hours. Preferably, the final heat treatment is performed at a temperature of 450 to 550°C for 1.5 to 2.5 hours.

Hereinafter, more specific embodiments of the present invention will be described concerning the examples below:

### Example 1

In this example, an alloy composed of 32wt%RE-1wt%B-1.5wt%TM-bal.wt%Fe (where RE=rare earth element, TM=3d transition element, x=28-35, y=0.5-1.5, z= 0 to 15) was melted by an induction heating method in an argon atmosphere, and then rapidly cooled by a strip casting method to manufacture an alloy strip.

In the process of coarsely pulverizing the manufactured alloy strip, the strip was loaded into a vacuum furnace, evacuated, and maintained in a hydrogen atmosphere for more than 2 hours, allowing hydrogen to be absorbed into the strip. Then the strip was heated to 600°C under a vacuum atmosphere to get rid of the hydrogen in the strip. The powder that was pulverized coarsely and treated with hydrogen, was manufactured into uniform and fine powders with an average particle diameter ranging from 1 to 5.0*µ*m by pulverizing using a jet mill technology. The process of manufacturing the alloy strip into fine powder comprises performing the process in a nitrogen or inert gas atmosphere to prevent oxygen contamination and then deterioration of magnetic properties.

The fine rare earth powder pulverized by a jet mill is molded in a magnetic field as follows: The rare earth powder was poured into a mold under a nitrogen atmosphere, and a direct current magnetic field was applied by electromagnets located on the left and right sides of the mold to orient the rare earth powder in a uniaxial direction. At the same time, dust molding was performed by pressing an upper and a lower punch to form a molded body.

The molded body obtained by the molding in a magnetic field was loaded into a sintering furnace and maintained sufficiently at 400°C or below under a vacuum atmosphere to completely remove any remaining impurity organic substances, and then raised to 1050°C and maintained for 2 hours to carry out densification during sintering.

After manufacturing the sintered body through the sintering process as described above, the sintered body was processed into a magnet 12.5*12.5*5 mm in size.

After the processed magnet was immersed in an alkaline degreaser solution, the oil on the surface of the magnet was removed by rubbing it with a ceramic ball 2 to mm in diameter, and the remaining degreaser was completely removed by thoroughly washing the magnet at several times with distilled water.

The cleaned magnet body was immersed in the plating solution as mentioned below and performed the electroless plating.

In the electroless plating process, the electroless plating solution was prepared by mixing ultrapure water (DI Water) from which ion components in water have been removed and, Sodium Hydroxide, Copper(II) Sulfate Pentahydrate, EDTA-4Na tetrahydrate, and formaldehyde solution.

The plating solution was a basic plating solution with a hydrogen ion concentration (PH) of 12.5 or higher and was maintained at the solution temperature of 60°C and stirred at a stirrer bar speed of 100 RPM. Then, the sintered magnet body was completely submerged in the solution and the plating was performed for 30 minutes.

Then, a Tb Hydride powder slurry was prepared by uniformly mixing Tb Hydride powder with alcohol as a liquid solvent in a ratio of 50%:50%. The Tb Hydride powder slurry was coated on the surface of the copper layer that is plated on the surface of the sintered body.

An amount of 1.0 parts by weight per 100 parts by weight of the sintered body was used to supply the Tb Hydride powder slurry.

Forming a copper metal layer, which is a low melting point metal of the present invention is simpler than coating powders. The low melting point metal, which is a plating layer, exists uniformly in a liquid form on the surface of the sintered body, so that this has the effect that the diffusion of heavy rare earths also occurs uniformly across the entire body surface on the grain boundaries of the sintered body.

Then, in order to diffuse the coated Tb Hydride compound to the grain boundaries inside the magnets, the coated body was placed in a heating furnace and heated under an argon atmosphere at a temperature increase rate of 1°C/min. The Tb Hydride compound was kept at 900°C for 6 hours. The penetration reaction was enabled by the decomposition of Tb from the compound and its diffusion inside the magnet. After the diffusion treatment, the diffusion layer on the surface was removed, and a stress relief heat treatment was performed at 900°C for 10 hours, followed by a final heat treatment at 500°C for 2 hours.

Comparative Example 1 was manufactured in the same manner as Examples 1-1 to 1-4 of the present invention except for whether copper electroless plating was applied or not.

The properties of the base material that was used in the diffusion of Examples 1-1 to 1-4 and Comparative Example 1 were measured into Br = 14.4 kG and Hcj = 14.65 kOe. The magnet that the final grain boundary diffusion was completed, was measured after performing a surface treatment again to remove the remaining diffusion layer. Table 1 shows the results of evaluating the magnetic properties.

**Table 1**

| Comparison of magnetic properties after copper electroless plating and slurry coating of Tb Hydride compound on the sintered body | | | | | |
|---|---|---|---|---|---|
| Samples | Process conditions | | Magnetic properties | | |
| | Types | Amounts(wt%) | Residual magnetic flux density Br(kG) | Coercivity Hcj(kOe) | Irreversible thermal demagnetization (140°C)% |
| Comparative Example 1 | | | 14.22 | 28.37 | 2.52 |
| Example 1-1 | Electroless plating | 0.2 | 14.16 | 28.35 | 0.64 |
| Example 1-2 | | 0.4 | 14.19 | 28.39 | 2.09 |
| Example 1-3 | | 0.6 | 14.18 | 28.30 | 2.21 |
| Example 1-4 | | 0.8 | 14.07 | 28.03 | 4.59 |

As shown in the magnetic property evaluation results in Table 1, the best magnetic properties were obtained in an amount of 99.8% by weight of the sintered body and an electroless plating amount of 0.2% by weight. More precisely, the best results were obtained in Example 1-1 of Examples 1-1 to 1-4 and Comparative Example 1 at 0.64% irreversible thermal demagnetization.

The irreversible thermal demagnetization is more important because it is a value that can evaluate the uniformity of grain boundary diffusion.

A 3 Tesla magnetic field was used to magnetize the magnetic specimen in Examples 2 of the present invention, and a flux meter was used to measure the total flux(F1) of the magnet. Then, the magnet that has been magnetized is put in an oven that is heated to 140°C and held for two hours to perform a thermal demagnetization. After the thermal demagnetization, the magnet is cooled to room temperature again and the total flux(F2) is measured. The thermal demagnetization rate (F1-F2)/F1 * 100) was determined by comparing the flux of the magnet measured before and after the thermal demagnetization..

When mostly all of low melting point materials are mixed and used in grain boundary diffusion for medium rare earth and light rare earth, the residual magnetic flux density is decreased significantly. But when a copper metal layer is coated, the residual magnetic flux density is not changed remarkably. In other words, the residual magnetic flux density is an important characteristic that determines the strength of a magnet, so it can be advantageous.

The copper as a low melting point element is diffused into the grain boundary, allowing the melting point of Nd-rich to lower. The grain boundary diffusion of heavy and light rare earth elements is improved and thus the microstructure and crystal structure of the base grain interface are improved. But if the thickness of the copper metal layer goes beyond a certain level, the diffusion effect decreases.

### Example 2

In Examples 2, a copper metal slurry was sprayed without using a copper plating layer, and a slurry mixed with the copper metal powder and a liquid solvent was coated on the surface of the sintered body, and heavy rare-earth metal compound Tb was coated on the copper-coated surface. The process for Examples 2 of the present invention was performed under the same conditions as Examples 1, and Comparative Example 1, with the exception of the coating of hydride, and the spraying of copper metal slurry was the only difference.

The copper metal slurry was prepared by mixing the pure copper powders and liquid solvent at 40-60% by volume: 40-60% by volume. The slurry was placed in a container evenly dispersed by using a stirrer (magnetic stirrer) and then immersed and maintained for 1 to 2 minutes in the container to uniformly coat the copper to the magnet surface. Also, it is possible to uniformly coat the copper to the magnet surface using the spray method.

The properties of the base material used in the diffusion of Examples 2-1 to 2-3 and Comparative Example 1 were measured as Br = 14.4 kG, Hcj = 14.65 kOe, and the magnet for which final grain boundary diffusion was completed, was performed a surface treatment again and removed the remaining diffusion layer. Table 2 shows the results of evaluating the magnetic properties.

**Table 2**

| Comparison of magnetic properties after coating copper metal slurry to the sintered body by spraying and coating Tb Hydride compound slurry | | | | | |
|---|---|---|---|---|---|
| Samples | Process conditions | | Magnetic properties | | |
| | Types | Slurry thickness (µm) | Residual magnetic flux densityBr(kG) | Coercivity Hcj(kOe) | Irreversible thermal demagnetization (140°C)% |
| Comparative Example 1 | | - | 14.22 | 28.37 | 2.52 |
| Example 2-1 | Spray method | 1 | 14.20 | 28.69 | 0.87 |
| Example 2-2 | | 5 | 14.14 | 28.20 | 0.95 |
| Example 2-3 | | 10 | 14.15 | 28.15 | 1.78 |

As shown in the magnetic property evaluation results in Table 2, the best magnetic properties were obtained at a Cu particle size of 1 µm. More precisely, the best result was obtained in Example 2-1 of Examples 2-1 to 2-3 and Comparative Example 1 at 0.87% irreversible thermal demagnetization.

Since irreversible thermal demagnetization is a value that can evaluate the uniformity of grain boundary diffusion, the lower the demagnetization value, the better the magnet.

A 3 Tesla magnetic field was used to magnetize the magnetic specimen in Examples 2 of the present invention, and a flux meter was used to measure the total flux(F1) of the magnet. Then, the magnet that has been magnetized is put in an oven that is heated to 140°C and held for two hours to perform thermal demagnetization. After thermal demagnetization, the magnet is cooled to room temperature again and the total flux(F2) is measured. The thermal demagnetization rate (F1-F2)/F1 * 100) was determined by comparing the flux of the magnet measured before and after thermal demagnetization.

As a result of evaluating the magnetic properties of Examples 1 to 2 of the present invention, when a copper layer was formed on the surface of the sintered body, the thermal demagnetization was improved in all examples.

The present invention is not limited to the embodiments mentioned above, and it is possible to make modifications without departing from the scope of the present invention. For example, the composition of the raw material powder, the shape and size of the molded body, the application speed of the magnetic field, the sintering conditions, etc. can be appropriately altered.

## Claims

1. A method for manufacturing a rare earth sintered magnet comprising the steps of:
sintering rare-earth alloy powder to prepare a sintered body;
cleaning the sintered body;
forming a low melting point metal layer on the surface of the cleaned body;
coating a slurry mixed with a liquid solvent and a heavy rare-earth metal compound on the surface of the low melting point metal layer formed on the sintered body to form a heavy rare-earth metal compound coating layer;
loading the sintered body with the low melting point metal layer and the heavy rare-earth metal compound coating layer into a heating furnace to allow the heavy rare earth metal to diffuse into the grain boundaries of the sintered body under a vacuum or inert gas atmosphere;
loading the sintered body in which the heavy rare-earth metal has diffused into the grain boundaries of the alloy, into a heating furnace to perform a stress relief heat treatment under a vacuum or inert gas atmosphere; and
performing a final heat treatment after the stress relief heat treatment.

2. The method for manufacturing a rare earth sintered magnet in claim 1, wherein the metal of the low melting point metal layer is any one of Cu, Al, and Ga and alloys of Cu, Al, and Ga.

3. The method for manufacturing a rare earth sintered magnet in claim 1, wherein the thickness of the low melting point metal layer is 1 to 60*µ*m and the weight of the low melting point metal layer is 0.6% by weight of the sintered body.

4. The method for manufacturing a rare earth sintered magnet in claim 1, wherein the low melting point metal layer is formed by electroplating or electroless plating or coating.

5. The method for manufacturing a rare earth sintered magnet in claim 1, wherein the heavy rare earth compound is any one of Gd-Hydride, Gd-Fluoride, Nd-Hydride, Ho-Fluoride, Ho-Hydride, Dy-Hydride, Dy-Fluoride, Tb-Hydride and Tb-Fluoride powder.
